# EUROPÄISCHE PATENTSCHRIFT

(11) **EP 2 703 216 B1**
(45) Veröffentlichungstag und Bekanntmachung des Hinweises auf die Patenterteilung: **02.10.2019**
(21) Anmeldenummer: 13181124.2
(22) Anmeldetag: 21.08.2013
(51) Int. Cl.: B60P 7/15

(54) **Nutzfahrzeugaufbau mit Ladungssicherung für den Doppelstockbetrieb**
Commercial vehicle superstructure with load securing for double decker operation
Structure de véhicule utilitaire avec sécurisation de charge pour le fonctionnement à deux niveaux

(30) Priorität: 28.08.2012 DE 102012107910
(43) Veröffentlichungstag der Anmeldung: 05.03.2014
(73) Patentinhaber: Schmitz Cargobull AG, 48341 Altenberge (DE)
(72) Erfinder: Papen, Jurgen, 7151 Eibergen (NL); Timmermann, Michael, 46514 Schermbeck (DE); Beelmann, Reinhard, 45721 Haltern am See (DE); Lünenborg, Stefan, 46325 Borken (DE)
(74) Vertreter: Cohausz & Florack

(56) Entgegenhaltungen:
- EP-A1- 2 116 417
- EP-A1- 2 116 448
- DE-A1- 19 533 784
- DE-U1- 20 217 747
- DE-U1- 29 801 555
- US-A1- 2009 016 840

## Beschreibung

Die Erfindung betrifft einen Nutzfahrzeugaufbau, insbesondere Kofferaufbau eines Nutzfahrzeugs, insbesondere eines Lastkraftwagens, Anhängers und/oder Sattelaufliegers, mit einem Laderaum und wenigstens einer Seitenwand, wobei die Seitenwand wenigstens zwei vertikal verlaufende und zum Laderaum hin geöffnete Doppelstockschienen aufweist.

Nutzfahrzeuge zum Transport von Gütern im Straßenverkehr weisen zur Aufnahme der Güter geeignete Nutzfahrzeugaufbauten auf. Bei den in Frage kommenden Nutzfahrzeugen handelt es sich insbesondere um Lastkraftwagen Anhänger und/oder Sattelauflieger. Die Nutzfahrzeugaufbauten können dabei beispielsweise Planenaufbauten oder Kofferaufbauten sein.

Bei Planenaufbauten wird der Laderaum zumindest seitlich durch Planen verschlossen. Planenaufbauten, bei denen die seitlichen Planen in Längsrichtung des Nutzfahrzeugs aufgeschoben werden können, werden auch als Curtainsider-Aufbauten bezeichnet. Im Gegensatz zu den Planenaufbauten wird der Laderaum von Kofferaufbauten auch seitlich durch feste Wände umschlossen. Diese sind meist in Form von Sandwich-Paneelen ausgebildet und weisen äußere Decklagen und eine dazwischen angeordnete Kernschicht, etwa aus einem geschäumten Kunststoff, auf. Kofferaufbauten, die schnell von einem Anhängerchassis aufgenommen und wieder getrennt werden können, werden als Wechselkofferaufbauten bezeichnet und weisen Beine auf, mit deren Hilfe die Wechselkofferaufbauten auf dem Boden in einer Höhe abgestellt werden können, die ein Unterfahren der Wechselkofferaufbauten durch einen Anhängerchassis zum Zwecke der Aufnahme der Wechselkofferaufbauten erlaubt.

Damit die Nutzfahrzeugaufbauten abhängig von den zu transportierenden Gütern flexibel beladen werden können, werden diese teilweise mit sogenannten Doppelstockschienen ausgerüstet. Diese vertikal verlaufenden und in vorbestimmten Abständen in Längsrichtung des Nutzfahrzeugs verteilt angeordneten Doppelstockschienen dienen der Aufnahme von sogenannten Doppelstockbalken in verschiedenen Höhen. Die Doppelstockbalken erstrecken sich dann quer zum Nutzfahrzeug von einer Doppelstockschiene zu einer gegenüberliegenden Doppelstockschiene an der anderen Seitenwand. Die Doppelstockschienen sind entsprechend der Breite oder Länge von Normpaletten voneinander beabstandet, so dass eine Normpalette auf zwei benachbarten Doppelstockbalken abgestellt werden kann. Auf diese Weise können Normpaletten in mehreren Etagen übereinander verladen werden, um den Laderaum möglichst effizient auszunutzen.

Die Art und die Anbringung der Doppelstockschienen im Sinne der Erfindung ist insbesondere in der DE EP 2 116 448 A1 beschrieben, weshalb diese Beschreibung durch Bezugnahme auch zum Gegenstand der vorliegenden Beschreibung im Sinne eines bevorzugten Ausführungsbeispiels gemacht wird. Die Doppelstockschienen sind im Falle von Kofferaufbauten meist in den Seitenwänden eingelassen, um die Breite des Laderaums voll nutzen zu können. Die Doppelstockschienen dienen zudem sowohl der Arretierung der Doppelstockbalken in der gewünschten Höhe als auch der Führung der Doppelstockbalken beim Verstellen von einer Höhe auf eine andere Höhe.

Damit die auf den Doppelstockbalken abgestellte Ladung gegen Verrutschen gesichert werden kann, weisen einige Nutzfahrzeugaufbauten zwischen den Doppelstockschienen längs zum Nutzfahrzeugaufbau Ladungssicherungsschienen auf, in denen Ladungssicherungsmittel wie Spanngurte oder dergleichen befestigt werden können. Beim Anbringen der Ladungssicherungsschienen muss ein Kompromiss zwischen einer leichten Verladung und einer kostengünstigen Herstellung des Nutzfahrzeugs getroffen werden.

Es kann beispielsweise zwischen zwei Doppelstockschienen jeweils nur eine einzige Ladungssicherungsschiene vorgesehen werden. Dann kann jedoch die Ladungssicherung mühsam sein, wenn die Doppelstockbalken weit oberhalb oder unterhalb der Ladungssicherungsschiene montiert werden. Wenn zwischen den Doppelstockschienen eine Reihe von Ladungssicherungsschienen auf unterschiedlichen Höhen vorgesehen werden, wie dies bei dem aus der DE 10 2008 015 757 B3 bekannten Nutzfahrzeugaufbau der Fall ist, steht, egal in welcher Höhe die Doppelstockbalken eingesetzt werden, immer eine geeignete Ladungssicherungsschiene zur Verfügung. Allerdings sind solche Kofferaufbauten nur zu entsprechend höheren Kosten zu fertigen.

Der Erfindung liegt daher die Aufgabe zugrunde, die Nutzfahrzeugaufbauten der eingangs genannten und zuvor näher beschriebenen Art derart auszugestalten und weiterzubilden, dass den bekannten Nachteilen Rechnung getragen werden kann. Diese Aufgabe ist erfindungsgemäß bei einem Nutzfahrzeug nach dem Oberbegriff des Anspruchs 1 dadurch gelöst, dass wenigstens ein Ladungssicherungsbalken in beiden Doppelstockschienen höhenverschiebbar aufgenommen und in unterschiedlichen Höhen festlegbar gehalten ist.

Erfindungsgemäß werden also die Doppelstockschienen nicht nur zur Montage der Doppelstockbalken, sondern auch zur Montage des Ladungssicherungsbalkens genutzt. Dabei sind auch die Ladungssicherungsbalken in unterschiedlichen Höhen in den Doppelstockschienen festlegbar und/oder arretierbar. Auf diese Weise wird erreicht, dass sich die Montagehöhe des Ladungssicherungsbalkens an die Montagehöhe der Doppelstockbalken anpassen lässt, um unabhängig von der Montagehöhe der Doppelstockbalken eine einfache und sichere Ladungssicherung der auf den Doppelstockbalken abgestellten Güter zu erreichen.

Die Verwendung der Ladungssicherungsbalken ist dabei nicht zwingend an die gleichzeitige Verwendung von Doppelstockbalken gekoppelt. Die Ladungssicherungsbalken können bedarfsweise auch zur Ladungssicherung von auf dem Boden des Nutzfahrzeugaufbaus abgestellten Gütern genutzt werden. Abhängig von der Art und Größe der Güter kann der wenigstens eine Ladungssicherungsbalken in den Doppelstockschienen in unterschiedlichen Höhen festgelegt bzw. arretiert werden. Bedarfsweise können an der wenigstens einen Seitenwand auch zwei oder mehrere Ladungssicherungsbalken übereinander festgelegt werden, beispielsweise um besonders schwere Güter gegen Verrutschen oder Umkippen zu sichern.

Um gleichzeitig eine einfache Höhenverstellung der Ladungssicherungsbalken zu ermöglichen, sind die Ladungsicherungsbalken nicht nur in verschiedenen Höhen arretierbar, sondern auch bei der Höhenverstellung in den Doppelstockschienen geführt. Diese Führung kann durch einen Formschluss quer zu den Doppelstockschienen, beispielsweise längs und/oder quer zum Nutzfahrzeug, erreicht werden.

Ein Ladungssicherungsbalken erstreckt sich im montierten Zustand von einer Doppelstockschiene zu einer weiteren Doppelstockschiene der gleichen Seitenwand. Die Anzahl der Ladungssicherungsbalken kann dabei insgesamt variieren. Es können mehrere Ladungssicherungsbalken übereinander und oder in Längsrichtung des Nutzfahrzeugs nebeneinander angeordnet sein. Gleiches gilt dann auch für die Doppelstockbalken. Zudem ist es bevorzugt, wenn an der gegenüberliegenden Seitenwand gleichartige Doppelstockschienen vorgesehen sind. Dann können auch zwischen diesen Doppelstockschienen Ladungssicherungsbalken vorgesehen werden.

Doppelstockschienen im Sinne der Erfindung können grundsätzlich alle vertikalen Schienen der Seitenwand des Nutzfahrzeugaufbaus sein, die zum Laderaum hin geöffnet sind. Dementsprechend müssen die Doppelstockschienen auch nicht zwingend zur Aufnahme von Doppelstockbalken vorgesehen sein. Die Doppelstockschienen können auch zur Aufnahme anderer Ausstattungseinrichtungen des Nutzfahrzeugs vorgesehen sein. Beispielsweise können die Doppelstockschienen dazu vorgesehen und ausgebildet sein, bestimmte Ladungssicherungselemente an der Seitenwand höhenverstellbar festzulegen. Dies kann beispielsweise der Ladungssicherung oder aber lediglich dem sicheren Verstauen der Ladungssicherungselemente dienen, wenn diese nicht benutzt werden. Die Ladungssicherungselemente können so weder die zu transportierenden Güter noch den Nutzfahrzeugaufbau beschädigen.

Besonders bevorzugt ist es jedoch, wenn die Doppelstockschienen tatsächlich zur Aufnahme und Höhenverstellung von Doppelstockbalken vorgesehen und ausgebildet sind. Diese Doppelstockschienen können nämlich beispielsweise die zur Ladungssicherung mit Hilfe der Ladungssicherungsbalken benötigten Kräfte aufnehmen und/oder einen sicheren Doppelstockbetrieb des Nutzfahrzeugaufbaus ermöglichen. Daher wird der Einfachheit und der besseren Verständlichkeit halber weiter an dem Begriff Doppelstockschiene festgehalten, ohne jeweils umständlich zwischen einer Doppelstockschiene im engen Sinne und einer anderen vertikalen, zum Laderaum offenen Schiene wenigstens einer Seitenwand zu unterscheiden. Der Begriff Doppelstockschiene wird also weiter verwendet, auch wenn dieser erfindungsgemäß eine breitere Bedeutung haben kann, als ihm teilweise in der Praxis zukommt.

Bei einer ersten bevorzugten Ausgestaltung des Nutzfahrzeugaufbaus ist in wenigstens einer der Doppelstockschienen zusätzlich zu dem Ladungssicherungsbalken ein Doppelstockbalken höhenverschiebbar aufgenommen und in unterschiedlichen Höhen festlegbar gehalten. Insbesondere ist in jeder der beiden den wenigstens einen Ladungssicherungsbalken aufnehmenden Doppelstockschienen ein Doppelstockbalken höhenverschiebbar aufgenommen und in unterschiedlichen Höhen festlegbar gehalten. Diese gleichzeitige Aufnahme von Ladungssicherungsbalken und Doppelstockbalken in ein und derselben Doppelstockschiene erlaubt eine optimale Anpassung der Ladungssicherung im Doppelstockbetrieb des Nutzfahrzeugs.

Besonders bevorzugt ist es grundsätzlich, wenn die Doppelstockschienen eine zum Laderaum geöffnete T-Nut aufweisen. Dies bedeutet, dass die Nut der Doppelstockschiene Hinterschneidungen aufweist und im Querschnitt wenigstens abschnittsweise T-förmig ausgebildet ist. Konstruktiv einfach ist es dabei, wenn die Doppelstockschiene die Öffnung zum Laderaum verengende Rippen aufweist. Der Ladungssicherungsbalken und/oder wenigstens ein Doppelstockbalken kann dann die Rippen der T-Nut hintergreifend in der T-Nut gehalten sein. Der entsprechende Formschluss verhindert dabei vorzugsweise jedenfalls, dass der Ladungssicherungsbalken und/oder der wenigstens eine Doppelstockbalken versehentlich senkrecht zur Doppelstockschiene aus dieser herausgezogen wird.

Damit der Ladungssicherungsbalken und/oder der wenigstens eine Doppelstockbalken einfach und zuverlässig entlang einer Doppelstockschiene verschoben werden kann, ohne versehentlich außer Eingriff mit der Doppelstockschiene zu gelangen, kann der Ladungssicherungsbalken und/oder der wenigstens eine Doppelstockbalken wenigstens einen Schiebling zum Eingreifen in eine Doppelstockschiene, vorzugsweise zum Hintergreifen der Hinterschneidungen oder Rippen der Doppelstockschiene, aufweisen.

In diesem Zusammenhang ist es besonders bevorzugt, wenn die Doppelstockschiene eine Einschuböffnung für den Ladungssicherungsbalken und/oder den Doppelstockbalken aufweist. Über diese Einschuböffnung in der Doppelstockschiene kann der Ladungssicherungsbalken und/oder der wenigstens eine Doppelstockbalken, insbesondere der entsprechende Schiebling in die Doppelstockschiene eingeschoben und/oder aus der Doppelstockschiene herausgenommen werden. Der einfacheren Handhabung wegen bietet es sich an, wenn die Einschuböffnung an einem Ende, vorzugsweise dem unteren Ende der Doppelstockschiene vorgesehen ist. Dabei kann die Einschuböffnung der Einfachheit halber dadurch geschaffen werden, dass die zum Laderaum hinweisende Öffnung der Doppelstockschiene im Bereich der Einschuböffnung breiter ausgebildet ist. Über die Einschuböffnung kann ein Schiebling dann beispielsweise leicht in eine die Hinterschneidungen der Doppelstockschiene hintergreifende Position gebracht werden. Wenn die Einschuböffnung am unteren Ende vorgesehen ist, müssen die Doppelstockbalken und die Ladungssicherungsbalken zum Einbringen in die Doppelstockschienen nicht übermäßig hoch gehoben werden.

Um einen korrespondierenden Eingriff des Schieblings in die Nut der Doppelstockschiene und damit eine präzise Führung des Schieblings entlang der Doppelstockschiene zu gewährleisten, weist der Schiebling wenigstens abschnittsweise einen T-förmigen Querschnitt auf. Alternativ oder zusätzlich ist vorgesehen, dass der Schiebling die Rippen der Doppelstockschienen hintergreift, um so einem versehentlichen Herausziehen des Schieblings aus der Doppelstockschiene entgegenzuwirken.

Der Schiebling kann in einfacher Weise als Gleitstück ausgebildet sein. Der Schiebling rutscht dann aufgrund seiner Form entlang der Doppelstockschiene zur gewünschten Position, wozu der Schiebling abgerundete Kanten oder dergleichen aufweisen kann. Um die Reibung gering zu halten, sind die möglicherweise aneinander reibenden Flächen glatt und der Schiebling aus einem Kunststoff ausgebildet. Die Reibung zwischen dem Schiebling und der Doppelstockschiene kann auch dadurch vermindert werden, dass der Schiebling in Form eines Rads ausgebildet ist das beim Verschieben des Schieblings entlang der Doppelstockschiene an einer Flanke der Doppelstockschiene, zwischen dem Nutgrund und den Rippen im Bereich der Öffnung zum Laderaum abrollen kann. Dabei ist es besonders bevorzugt, wenn sich die Drehachse des Rads etwa senkrecht zur Seitenwand erstreckt. Das Rad ist dabei zudem vorzugsweise so groß, dass es die Hinterschneidungen der Doppelstockschiene hintergreifen kann. Zusätzlich oder alternativ dazu kann der Schiebling auch eine Rolle aufweisen, die einer bestimmten Flanke der Doppelstockschiene zugeordnet ist, um an dieser Flanke abzurollen, wenn der Schiebling entlang der Doppelstockschiene verschoben wird. Dabei kann auch eine Mehrzahl von Rollen pro Schiebling vorgesehen sein, die unterschiedlichen Flanken oder Rippen der Doppelstockschiene zugeordnet sein können.

Da die Abstände zwischen den Doppelstockschienen versehentlich oder bewusst variieren können, kann es zur Anpassung an die jeweiligen Anschlussmaße günstig sein, wenn der Ladungssicherungsbalken teleskopierbar ausgebildet ist. Alternativ oder zusätzlich kann aber auch der Schiebling entlang des Ladungssicherungsbalkens verstellbar ausgebildet sein. Eine solche Verstellbarkeit kann dabei längs oder quer zum Ladungssicherungsbalken vorgesehen sein.

Zur Abstützung der Gewichtskräfte eines Ladungssicherungsbalkens und/oder eines Doppelstockbalkens gegenüber den Seitenwänden können die Doppelstockschienen Aussparungen aufweisen. Diese Aussparungen können bedarfsweise entlang der Doppelstockschienen gleichmäßige Abstände aufweisen. Dadurch wird ein gleichmäßiges Höhenraster erreicht. Alternativ oder zusätzlich können die Aussparungen einem formschlüssigen Eingreifen der Ladungssicherungsbalken und/oder der Doppelstockbalken dienen, so dass diese nicht versehentlich in den Doppelstockschienen nach unten rutschen können.

Zum einfachen Festlegen des Ladungssicherungsbalkens und/oder des Doppelstockbalkens ist es bevorzugt, wenn der Ladungssicherungsbalken und/oder der Doppelstockbalken ein Arretierelement zum Eingreifen und Abstützen in wenigstens eine Aussparung der Doppelstockschiene aufweist. Das Eingreifen des Arretierelements in die Aussparung kann dabei vorzugsweise zu einem Formschluss in einer vertikalen Richtung nach unten führen.

Um den Ladungssicherungsbalken schnell und einfach in der Höhe zu verstellen, bietet es sich an, wenn die Arretierelemente des Ladungssicherungsbalkens von der Montagestellung in eine Positionierstellung verstellbar sind. Dabei kann in der Montagestellung ein Formschluss zwischen den Arretierelementen und den Aussparungen der Doppelstockschienen in einer Richtung vertikal nach unten bestehen, während dieser Formschluss in der Positionierstellung aufgehoben ist. In der Positionierstellung ist der Ladungssicherungsbalken dann vorzugsweise längs zur den Doppelstockschienen verschiebbar in denselben gehalten. Besonders einfach und zuverlässig ist es dabei, wenn die Arretierelemente beim Verstellen von der Montagestellung in die Positionierstellung und zurück senkrecht zu den Doppelstockschienen verschoben werden.

Das Verstellen des Ladungssicherungsbalkens entlang der Doppelstockschienen lässt sich vereinfachen, wenn die Arretierelemente des Ladungssicherungsbalkens mit einer Bedieneinheit gekoppelt sind, mit der die Arretierelemente von der Montagestellung in die Positionierstellung und zurück verstellt werden können. Dabei bietet es sich aus konstruktiver Sicht und der einfachen Handhabung wegen an, die Bedieneinheit als Handhebel auszubilden.

Sind die Arretierelemente und/oder ist die Bedieneinheit in Richtung der Positionierstellung der Arretierelemente federbelastet, kann in einfacher Weise sichergestellt werden, dass die Arretierelemente nach dem Verschieben des Ladungssicherungsbalkens wieder in die Montagestellung übergehen und den Ladungssicherungsbalken in den Doppelstockschienen festlegen.

Um eine Beschädigung der Seitenwand durch das Verstellen des Ladungssicherungsbalkens entlang der Doppelstockschienen zu vermeiden, kann der Ladungssicherungsbalken angrenzend zur wenigstens einen Seitenwand eine Scheuerschutzleiste aufweisen. Dabei ist die Seitenwand vorzugsweise härter als die Scheuerschutzleiste ausgebildet. Die Scheuerschutzleisten können dabei leicht auswechselbar montiert sein. Als günstig haben sich wulstartige Scheuerschutzleisten und/oder Scheuerschutzleisten aus Kunststoff erwiesen.

Damit eine hohe Stabilität und Funktionalität des Ladungssicherungsbalkens zu geringen Herstellungskosten erreicht werden kann, bietet es sich an, wenn die Grundform des Ladungssicherungsbalkens durch wenigstens zwei Teilprofile gebildet wird. Diese sind grundsätzlich günstig herzustellen und leicht miteinander zu verbinden.

Nachfolgend wird die Erfindung anhand einer lediglich ein Ausführungsbeispiel darstellenden Zeichnung näher erläutert. In der Zeichnung zeigt
- Fig. 1: einen erfindungsgemäßen Nutzfahrzeugaufbau in einer perspektivischen Ansicht,
- Fig. 2: den Ladungssicherungsbalken aus Fig. 1 in einer Draufsicht von der Vorderseite,
- Fig. 3: den Ladungssicherungsbalken aus Fig. 1 in einer Draufsicht von der Rückseite,
- Fig. 4: ein Detail der Doppelstockschiene aus Fig. 1 in einer Draufsicht,
- Fig. 5: die Doppelstockschiene aus Fig. 4 in einer Schnittansicht,
- Fig. 6: den Ladungssicherungsbalken in einer Seitenansicht in der Montagestellung,
- Fig. 7: den Ladungssicherungsbalken in einer Schnittansicht gemäß der Schnittebene VI-VI von Fig. 2 in der Montagestellung und
- Fig. 8: den Ladungssicherungsbalken in einer Schnittansicht gemäß der Schnittebene VI-VI von Fig. 2 in der Positionierstellung.

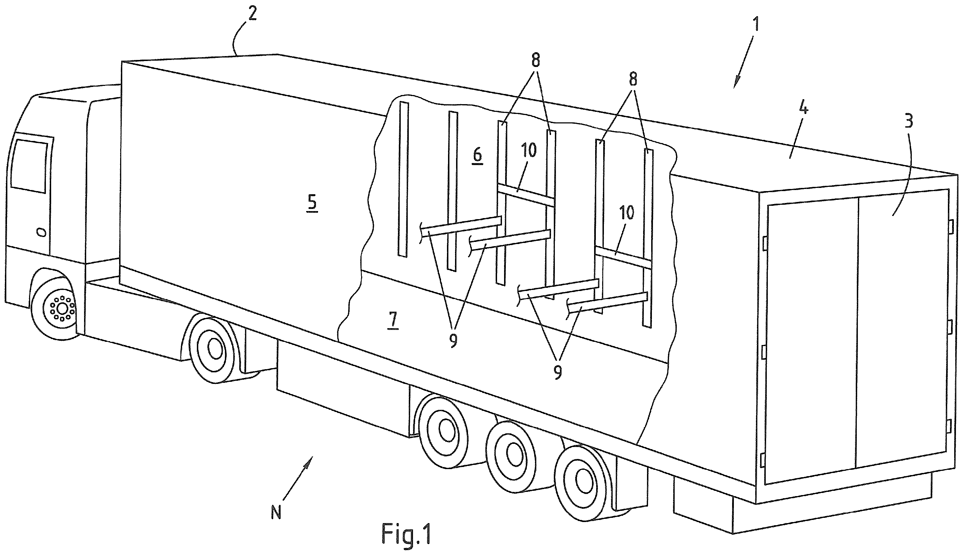

In der Fig. 1 ist ein Nutzfahrzeug N in Form eines Sattelaufliegers mit einem Nutzfahrzeugaufbau 1 in Form eines Kofferaufbaus dargestellt. Der Nutzfahrzeugaufbau 1 umfasst eine Stirnwand 2, eine Rückwand 3, ein Dach 4, zwei Seitenwände 5,6 und einen Boden 7. Die Seitenwände 5,6, die Stirnwand 2 und das Dach 4 sind dabei als Sandwich-Paneele ausgebildet. Diese umfassen äußere Decklagen aus Metall, vorzugsweise Stahl, zwischen denen eine Kernlage aus einem geschäumten Kunststoff angeordnet ist.

Bei dem dargestellten und insoweit bevorzugten Nutzfahrzeugaufbau 1 sind, wie in der EP 2 116 448 A1 beschrieben, Doppelstockschienen 8 in die Seitenwände 5,6 eingelassen die sich in vertikaler Richtung erstrecken und untereinander fest vorgegebene Abstände in horizontaler Richtung aufweisen. In zwei benachbarten Doppelstockschienen 8 einer Seitenwand 5,6 ist jeweils ein Doppelstockbalken 9 montiert. Zudem ist ein Ladungssicherungsbalken 10 in beiden Doppelstockschienen 8 montiert. Während sich die Doppelstockbalken 10 quer zum Nutzfahrzeugaufbau 1 erstrecken, erstreckt sich der Ladungssicherungsbalken 10 in Längsrichtung des Nutzfahrzeugaufbaus 1. Die Doppelstockbalken 9 sind dazu ausgebildet die Enden zweier angrenzender Normpaletten aufzunehmen. Es können aber auch zwei Doppelstockschienen nahe beieinander vorgesehen sein. Dann können angrenzende Doppelstockbalken und angrenzende Normpaletten problemlos auf unterschiedlichen Höhen angeordnet werden. Zudem können die Doppelstockbalken unabhängig voneinander in einer separaten Doppelstockschiene verschoben werden. In einem solchen Fall sind benachbarte Doppelstockschienen abwechselnd einem sehr geringen Abstand und einem an die Maße einer Normpalette angepassten Abstand vorgesehen.

Nicht im Einzelnen dargestellt ist, dass die Doppelstockbalken 9 an der gegenüberliegenden Seitenwand 5,6 in gleichartigen Doppelstockschienen 8 gehalten sind und dass mit diesen Doppelstockschienen 8 ein gleichartiger Ladungssicherungsbalken 10 verbunden ist. Sowohl die Ladungssicherungsbalken 10 als auch die Doppelstockbalken 9 sind höhenverschiebbar in den gleichen Doppelstockschienen 8 gehalten und können auf unterschiedlichen Höhen in der Doppelstockschiene 8 übereinander festgelegt werden.

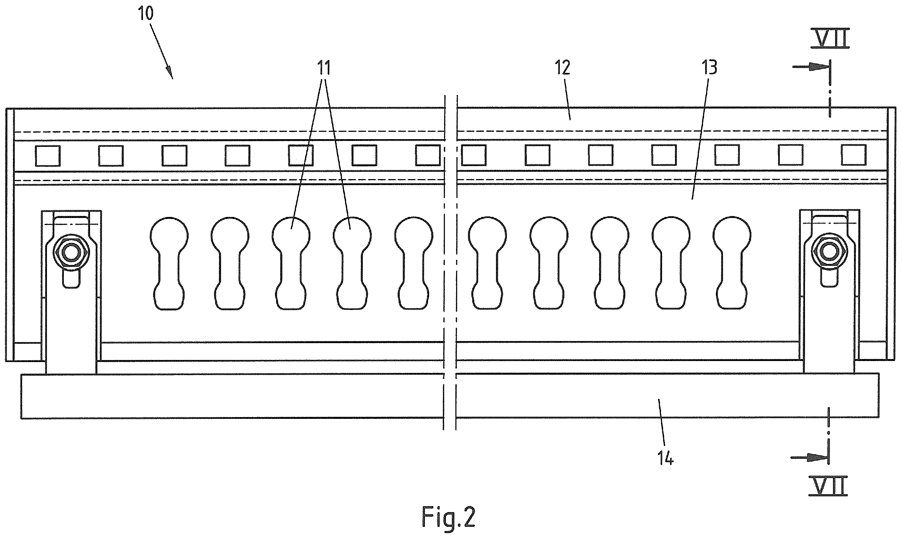

In der Fig. 2 ist der Ladungssicherungsbalken 10 in einer Draufsicht von vorne dargestellt. Die Vorderseite des Ladungssicherungsbalkens 10 weist eine ganze Reihe von in Längsrichtung in regelmäßigen Abständen nebeneinander angeordnete Öffnungen 11 auf, in denen Ladungssicherungsmittel wie Spanngurte oder dergleichen befestigt werden können. Die Grundform des Ladungssicherungsbalkens 10 wird durch zwei miteinander verbundene Teilprofile 12,13 gebildet. Weitere Anbauteile, wie etwa eine Bedieneinheit 14 in Form eines Handhebels zum Verschieben des Ladungssicherungsbalkens 10 sind ergänzend vorgesehen.

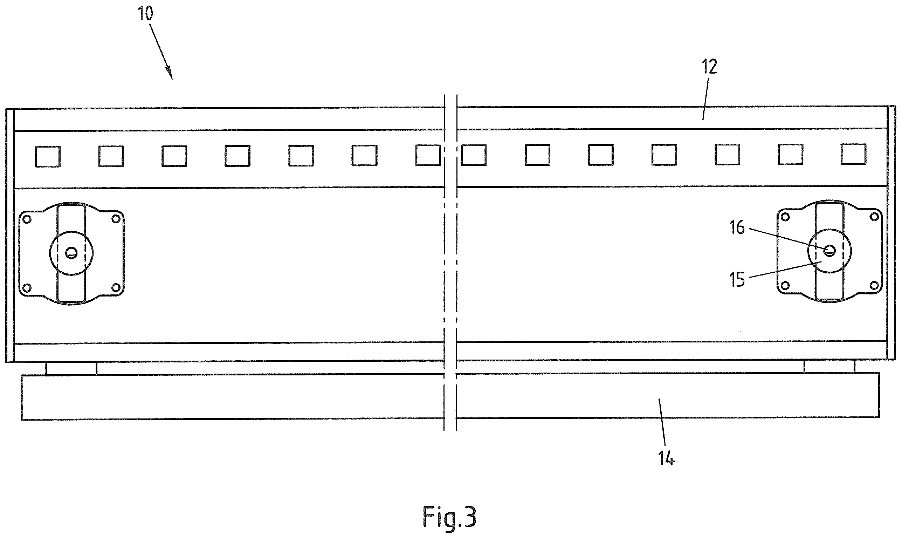

In der Fig. 3 ist die Rückseite des Ladungssicherungsbalkens 10 dargestellt. An dieser Seite sind den beiden äußeren Längsenden des Ladungssicherungsbalkens 10 Schieblinge 15 zugeordnet, die die Doppelstockschienen 8 eingreifen und dort in Längsrichtung derselben rauf und runter verschoben werden können. In den Schieblingen 15 sind zudem Arretierelemente 16 vorgesehen, um den Ladungssicherungsbalken 10 in der gewünschten Höhe in den Doppelstockschienen 8 festzulegen. Die Arretierelemente 16 können über die Bedieneinheit 14 verstellt werden, und so den Ladungssicherungsbalken 10 zum Verschieben in Längsrichtung der Doppelstockschienen 8 freigeben.

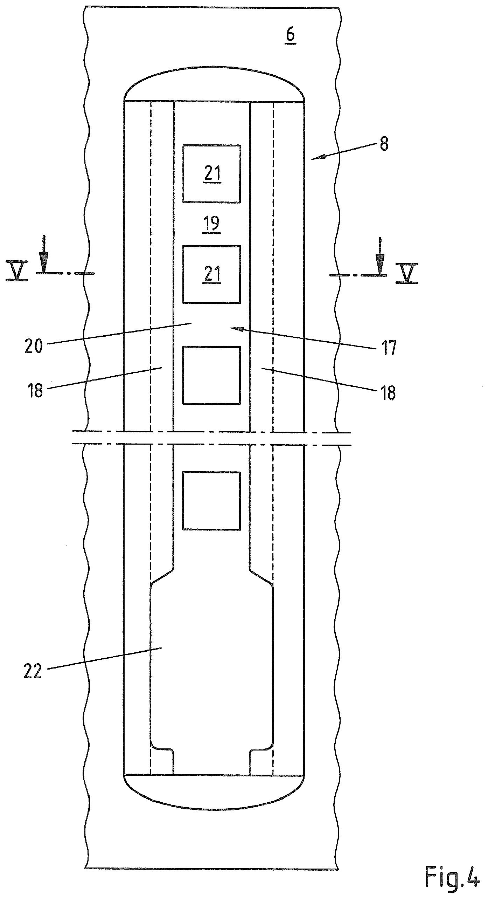

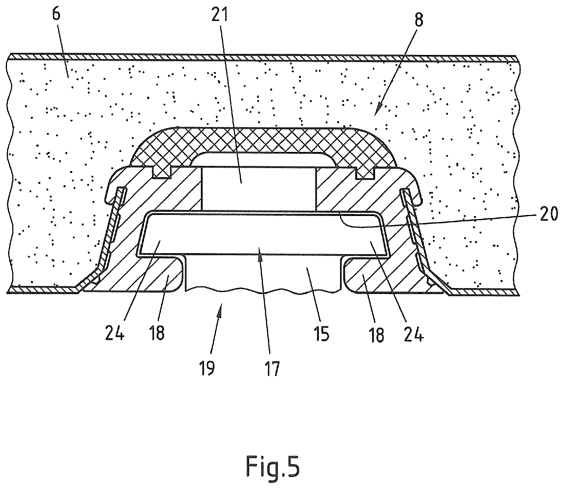

In den Fig. 4 und 5 sind die korrespondierend zu den Schieblingen 15 und den Arretierelementen 16 ausgebildeten Doppelstockschienen 8 dargestellt. Die Doppelstockschienen 8 weisen eine T-Nut 17 auf, welche einen entsprechenden T-förmigen Querschnitt aufweist. Diese Form der Nut 17 wird durch zwei Rippen 18 geschaffen, welche die Nut im Bereich der zum Laderaum weisenden Öffnung 19 verengen. Die Schieblinge 15 des Ladungssicherungsbalkens 10 weisen einen korrespondierenden T-förmigen Querschnitt auf, mit dem die Schieblinge 15 in den T-Nuten 17 der Doppelstockschienen 8 aufgenommen sind. Die Schieblinge 15 können so entlang der Doppelstockschienen 8 verschoben werden, und zwar ohne die Gefahr, dass der Ladungssicherungsbalken 10 außer Eingriff mit den Doppelstockschienen 8 gelangt, denn die Schieblinge 15 hintergreifen während des Verschiebens entlang der Doppelstockschiene 8 die Hinterschneidungen bzw. die Rippen 18 der T-Nut 17 der Doppelstockschienen 8. Ein versehentliches Herausziehen des Ladungssicherungsbalkens 10 bzw. Schieblings 15 senkrecht zur Seitenwand 5,6 wird also verhindert.

Die Doppelstockschienen 8 weisen entlang des Nutgrunds 20 Aussparungen 21 auf, in die die Arretierelemente 16 des Ladungssicherungsbalkens 10 eingreifen können. Der Ladungssicherungsbalken 10 stützt sich dann in seiner entsprechenden Montagestellung in Schwerkraftrichtung über die Arretierelemente 16 and Aussparungen 21 an den Doppelstockschienen 8 ab. Die Aussparungen 21 sind in gleichbleibenden Abständen zueinander angeordnet, so dass ein gleichbleibendes Höhenraster geschaffen wird.

Zum Einführen des Ladungssicherungsbalkens 10, in die Doppelstockschienen 8 weisen diese an ihren unteren Enden Einschuböffnungen 22 auf. Diese werden im Wesentlichen durch in diesem Bereich verkürzte Rippen 18 der T-Nut 17 gebildet. In die dort somit breiteren Öffnungen der Doppelstockschienen 8 können die Schieblinge 15 des Ladungssicherungsbalkens 10 eingesteckt und sodann entlang der Doppelstockschienen 8 nach oben in die jeweils gewünschte Position verschoben werden. Die Schieblinge 15 können über die Einschuböffnungen 22 auch wieder aus den Doppelstockschienen 8 entnommen, insbesondere herausgezogen werden, da die Einschuböffnungen 22 breiter sind als die in die T-Nut 17 einzuführenden Teile der Schieblinge 15 in gleicher Richtung.

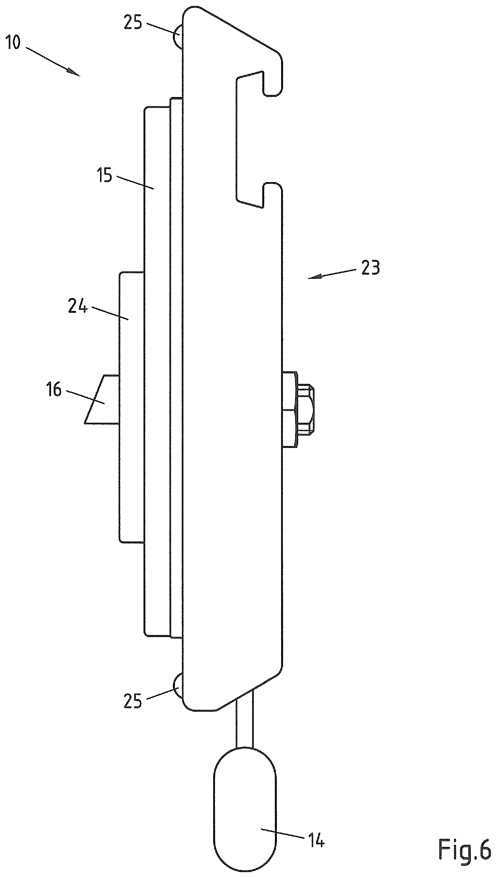

In der Fig. 6 ist der Ladungssicherungsbalken 10 in einer Seitenansicht dargestellt. Am unteren Ende des Ladungssicherungsbalkens ist die Bedieneinheit 14 zum Verstellen des Arretierelements 16 angeordnet. Das beim dargestellten und insoweit bevorzugten Ladungssicherungsbalken 10 stiftförmig ausgebildete Arretierelement 16 steht in der dargestellten Montagestellung gegenüber dem Schiebling 15 nach hinten vor. Der Schiebling 15 wiederum steht gegenüber dem Grundkörper 23 nach hinten vor, denn der Schiebling 15 greift in die T-Nut 17 der Doppelstockschiene 8 ein, während das Arretierelement 16 in der Montagestellung zudem in die Aussparungen 21 im Nutgrund 20 der Doppelstockschienen 8 eingreift. Dabei hintergreifen die Schieblinge 15 die Rippen 18 der T-Nuten 17 mit beidseitig nach außen vorstehenden Vorsprüngen 24.

Die Schieblinge 15 und die Doppelstockschienen 8 sind zudem so aufeinander abgestimmt, dass die Schieblinge 15 ohne große Reibung in den Doppelstockschienen 8 verschoben werden können. Damit dieses Verschieben nicht zu einer Beschädigung der Seitenwand 5,6 und/oder der Doppelstockschienen 8 führt ist an der Rückseite des Grundkörpers 23 des Ladungssicherungsbalkens 10 oben und unten je eine nach hinten vorstehende, wulstförmige Scheuerschutzleiste 25 vorgesehen, die im verbundenen Zustand an der Seitenwand 5,6 and und/oder den Doppelstockschienen 8 anliegt.

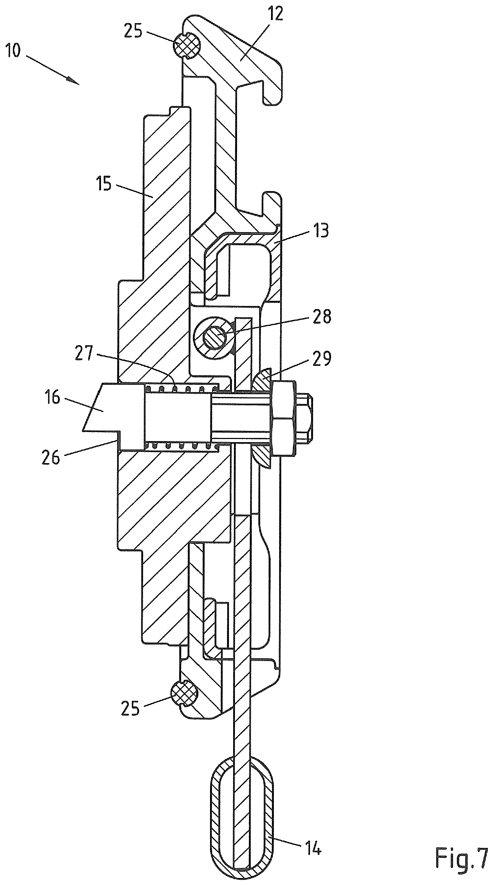

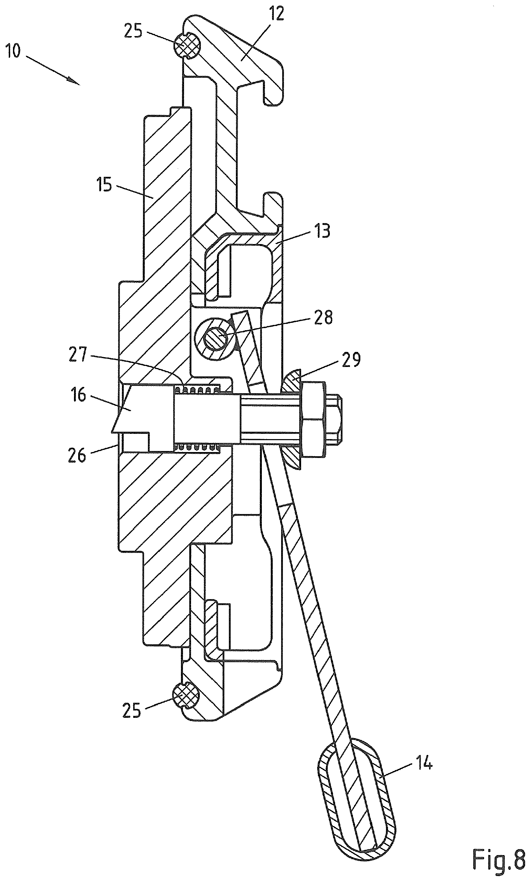

In den Fig. 7 ist eine Schnittansicht des Ladungssicherungsbalkens 10 in der Montagestellung dargestellt, während in der Fig. 8 der Ladungssicherungsbalken 10 in einer Positionierstellung dargestellt ist. Die Grundform des Ladungssicherungsbalkens 10 setzt sich dabei aus zwei Teilprofilen 12,13 zusammen.

In der Montagestellung ist das Arretierelement 16 in eine hintere Endstellung verschoben und liegt an einem Anschlag 26 des Schieblings, gegen den das Arretierelement 16 von der Rückstellkraft einer, vorliegend das Arretierelement 16 umgreifenden, Feder 27 gedrückt wird, an. Das Arretierelement 16 durchgreift zudem die Bedieneinheit 14, die um eine Drehachse 28 nach vorne verschwenkt werden kann. Dabei drückt die Bedieneinheit 14 einen Anschlag 29 des Arretierelements 16 nach vorne und schiebt das Arretierelement 16 gegen die Rückstellkraft der Feder 27 und senkrecht zur Doppelstockschiene 8 nach vorne, und zwar soweit, dass das Arretierelement 16 außer Eingriff mit der Aussparung 21 der Doppelstockschiene 8 gelangt.

Wenn die Bedieneinheit 14 in die in der Fig. 8 dargestellte Stellung geschwenkt wird, kann der Ladungssicherungsbalken 10 deshalb leicht in den Doppelstockschienen 8 hinauf und hinunter verschoben werden. Ist die gewünschte Höhe erreicht, lässt der Bediener einfach die Bedieneinheit 14 los. Aufgrund der Rückstellkraft der Feder 27 gelangt der Ladungssicherungsbalken 10 bzw. das Arretierelement 16 wieder in die Montagestellung. In dieser ist durch das Eingreifen der Arretierelemente in Aussparungen 21 der Doppelstockschienen 8 eine Arretierung des Ladungssicherungsbalkens 10 in den Doppelstockschienen 8 gegeben.

## Patentansprüche

1. Nutzfahrzeugaufbau (1), insbesondere Kofferaufbau eines Nutzfahrzeugs, insbesondere eines Lastkraftwagens, Anhängers und/oder Sattelaufliegers, mit einem Laderaum und wenigstens einer Seitenwand (5,6), wobei die Seitenwand (5,6) wenigstens zwei vertikal verlaufende und zum Laderaum hin geöffnete Doppelstockschienen (8) zur Aufnahme von Doppelstockbalken (9) aufweist,
**dadurch gekennzeichnet, dass** wenigstens ein Ladungssicherungsbalken (10) in beiden Doppelstockschienen (8) höhenverschiebbar aufgenommen und in unterschiedlichen Höhen festlegbar gehalten ist.

2. Nutzfahrzeugaufbau nach Anspruch 1,
**dadurch gekennzeichnet, dass** in wenigstens einer Doppelstockschiene (8) jeweils ein Doppelstockbalken (9) höhenverschiebbar aufgenommen und in unterschiedlichen Höhen festlegbar gehalten ist.

3. Nutzfahrzeugaufbau nach Anspruch 1 oder 2,
**dadurch gekennzeichnet, dass** die Doppelstockschienen (8) eine zum Laderaum geöffnete T-Nut (17) mit die Öffnung (19) zum Laderaum verengenden Rippen (18) bildet und dass der Ladungssicherungsbalken (10) und/oder wenigstens einer der Doppelstockbalken (9) die Rippen (18) der T-Nut (17) hintergreifend in der T-Nut (17) gehalten ist.

4. Nutzfahrzeugaufbau nach einem der Ansprüche 1 bis 3,
**dadurch gekennzeichnet, dass** der Ladungssicherungsbalken (10) und/oder der wenigstens eine Doppelstockbalken (9) wenigstens einen Schiebling (15) zum Eingreifen in die Doppelstockschienen (8) aufweist.

5. Nutzfahrzeugaufbau nach Anspruch 4,
**dadurch gekennzeichnet, dass** die Doppelstockschiene (8), vorzugsweise an einem Ende, eine Einschuböffnung (22) aufweist und dass der Schiebling (15) des Ladungssicherungsbalkens (10) und/oder des Doppelstockbalkens (9) über die Einschuböffnung (22) in die Doppelstockschiene (8) eingeschoben und/oder aus der Doppelstockschiene (8) herausgenommen werden kann.

6. Nutzfahrzeugaufbau nach Anspruch 4 oder 5,
**dadurch gekennzeichnet, dass** der Schiebling (15) wenigstens abschnittsweise einen T-förmigen Querschnitt aufweist und/oder die Rippen (18) der Doppelstockschienen (8) hintergreift.

7. Nutzfahrzeugaufbau nach einem der Ansprüche 4 bis 6,
**dadurch gekennzeichnet, dass** der Schiebling (15) als Gleitstück, Rad oder wenigstens eine Rolle aufweisend ausgebildet ist.

8. Nutzfahrzeugaufbau nach einem der Ansprüche 1 bis 7,
**dadurch gekennzeichnet, dass** der Ladungssicherungsbalken (10) teleskopierbar ausgebildet ist und/oder wenigstens einen längs und/oder quer verstellbaren Schiebling (15) aufweist.

9. Nutzfahrzeugaufbau nach einem der Ansprüche 1 bis 8,
**dadurch gekennzeichnet, dass** die Doppelstockschienen (8) in Längsrichtung, vorzugsweise in regelmäßigen Abständen, Aussparungen (21) aufweisen und dass der Ladungssicherungsbalken (10) und/oder der wenigstens eine Doppelstockbalken (9) zur Abstützung an den Doppelstockschienen (8) in eine Aussparung (21) eingreift.

10. Nutzfahrzeugaufbau nach Anspruch 9,
**dadurch gekennzeichnet, dass** der Ladungssicherungsbalken (10) und/oder der wenigstens eine Doppelstockbalken (9) wenigstens ein Arretierelement zum Eingreifen und Abstützen in Aussparungen (21) der Doppelstockschienen (8) aufweist.

11. Nutzfahrzeugaufbau nach Anspruch 10,
**dadurch gekennzeichnet, dass** die Arretierelemente (16) des Ladungssicherungsbalkens (10) von der Montagestellung in eine Positionierstellung verstellbar, vorzugsweise senkrecht zu den Doppelstockschienen (8) verschiebbar, sind und dass die Schieblinge (15) des Ladungssicherungsbalkens (10) in der Positionierstellung in der Doppelstockschiene (8) in Längsrichtung verfahren werden können.

12. Nutzfahrzeugaufbau nach Anspruch 10 oder 11,
**dadurch gekennzeichnet, dass** die Arretierelemente (16) des Ladungssicherungsbalkens (10) mit einer Bedieneinheit (14), vorzugsweise einem Hebel, derart gekoppelt sind, dass durch die Betätigung der Bedieneinheit (14) die Arretierelemente (16) von der Montagestellung in die Positionierstellung und zurück verstellt werden können.

13. Nutzfahrzeugaufbau nach einem der Ansprüche 10 bis 12,
**dadurch gekennzeichnet, dass** die Arretierelemente (16) und/oder die Bedieneinheit (14) in Richtung der Positionierstellung der Arretierelemente (16) federbelastet sind.

14. Nutzfahrzeugaufbau nach einem der Ansprüche 1 bis 13,
**dadurch gekennzeichnet, dass** der Ladungssicherungsbalken (10) angrenzend zur wenigstens einen Seitenwand (5,6) eine, vorzugsweise wulstartige, Scheuerschutzleiste (25) aus Kunststoff aufweist.

15. Nutzfahrzeugaufbau nach einem der Ansprüche 1 bis 14,
**dadurch gekennzeichnet, dass** die Grundform des Ladungssicherungsbalkens (10) durch wenigstens zwei Teilprofile (12,13) gebildet wird.

## Claims

1. Commercial vehicle superstructure (1), in particular box body of a commercial vehicle, in particular a heavy goods vehicle, trailer and/or semitrailer, having a loading space and at least one side wall (5, 6), wherein the side wall (5, 6) has at least two double-decker rails (8), running vertically and opened towards the loading space, for receiving double-decker beams (9), **characterised in that** at least one load-securing beam (10) is received height-adjustable in both double-decker rails (8) and can be fixably held at different heights.

2. Commercial vehicle superstructure according to claim 1, **characterised in that** respectively one double-decker beam (9) is received height-adjustable in at least one double-decker rail (8) and can be fixably held at different heights.

3. Commercial vehicle superstructure according to claim 1 or 2, **characterised in that** the double-decker rails (8) form a T-slot (17) opened to the loading space having ribs (18) narrowing the opening (19) toward the loading space, and **in that** the load-securing beam (10) and/or at least one of the double-decker beams (9) is held in the T-slot (17) engaging behind the ribs (18) of the T-slot (17).

4. Commercial vehicle superstructure according to any one of claims 1 to 3, **characterised in that** the load-securing beam (10) and/or the at least one double-decker beam (9) has at least one slide (15) for engagement in the double-decker rails (8).

5. Commercial vehicle superstructure according to claim 4, **characterised in that** the double-decker rail (8) has an insertion opening (22), preferably at one end, and **in that** the slide (15) of the load-securing beam (10) and/or of the double-decker beam (9) can be inserted into the double-decker rail (8) via the insertion opening (22) and/or can be removed from the double-decker rail (8).

6. Commercial vehicle superstructure according to claim 4 or 5, **characterised in that** the slide (15) has a T-shaped cross-section at least in sections and/or engages behind the ribs (18) of the double-decker rails (8).

7. Commercial vehicle superstructure according to any one of claims 4 to 6, **characterised in that** the slide (15) is designed as a slider, a wheel, or having at least one roller.

8. Commercial vehicle superstructure according to any one of claims 1 to 7, **characterised in that** the load-securing beam (10) is designed to be telescopic and/or has at least one longitudinally and/or transversely adjustable slide (15).

9. Commercial vehicle superstructure according to any one of claims 1 to 8, **characterised in that** the double-decker rails (8) have recesses (21) in the longitudinal direction, preferably at regular intervals, and **in that** the load-securing beam (10) and/or the at least one double-decker beam (9) for supporting the double-decker rails (8) engages in a recess (21).

10. Commercial vehicle superstructure according to claim 9, **characterised in that** the load-securing beam (10) and/or the at least one double-decker beam (9) has at least one locking element for engagement and support in recesses (21) of the double-decker rails (8).

11. Commercial vehicle superstructure according to claim 10, **characterised in that** the locking elements (16) of the load-securing beam (10) are adjustable, preferably displaceable perpendicular to the double-decker rails (8), from the mounting position into a positioning position, and **in that** the slides (15) of the load-securing beam (10) can be moved longitudinally in the positioning position in the double-decker rail (8).

12. Commercial vehicle superstructure according to claim 10 or 11, **characterised in that** the locking elements (16) of the load-securing beam (10) are coupled to an operating unit (14), preferably a lever, in such a way that the locking elements (16) can be adjusted from the mounting position into the positioning position and back by actuating the operating unit (14).

13. Commercial vehicle superstructure according to any one of claims 10 to 12, **characterised in that** the locking elements (16) and/or the operating unit (14) are spring-loaded toward the positioning position of the locking elements (16).

14. Commercial vehicle superstructure according to any one of claims 1 to 13, **characterised in that** the load-securing beam (10) has a, preferably bead-like, rubbing protection strip (25) made of plastic, adjacent to the at least one side wall (5, 6) .

15. Commercial vehicle superstructure according to any one of claims 1 to 14, **characterised in that** the basic shape of the load-securing beam (10) is formed by at least two partial profiles (12, 13) .

## Revendications

1. Carrosserie de véhicule utilitaire (1), notamment carrosserie en fourgon d'un véhicule utilitaire, notamment d'un poids-lourd, d'une remorque et/ou d'une semi-remorque, comprenant un espace de chargement et au moins une paroi latérale (5, 6), la paroi latérale (5, 6) possédant au moins deux rails à double niveau (8) qui s'étendent verticalement et qui sont ouverts en direction de l'espace de chargement, destinés à accueillir des poutres à double niveau (9), **caractérisée en ce que**
au moins une poutre d'arrimage de la charge (10) est accueillie de manière coulissante en hauteur dans les deux rails à double niveau (8) et est maintenue de manière à pouvoir être fixée à différentes hauteurs.

2. Carrosserie de véhicule utilitaire selon la revendication 1, **caractérisée en ce qu'**une poutre à double niveau (9) est respectivement accueillie de manière coulissante en hauteur dans au moins un rail à double niveau (8) et est maintenue de manière à pouvoir être fixée à différentes hauteurs.

3. Carrosserie de véhicule utilitaire selon la revendication 1 ou 2, **caractérisée en ce que** le rail à double niveau (8) forme une rainure en T (17) ouverte vers l'espace de chargement avec des nervures (18) qui rétrécissent l'ouverture (19) vers l'espace de chargement et **en ce que** la poutre d'arrimage de la charge (10) et/ou au moins l'une des poutres à double niveau (9) est maintenue dans la rainure en T (17) en étant en prise par l'arrière avec les nervures (18) de la rainure en T (17).

4. Carrosserie de véhicule utilitaire selon l'une des revendications 1 à 3, **caractérisée en ce que** la poutre d'arrimage de la charge (10) et/ou l'au moins une poutre à double niveau (9) possède au moins un élément coulissant (15) destiné à venir en prise dans les rails à double niveau (8).

5. Carrosserie de véhicule utilitaire selon la revendication 4, **caractérisée en ce que** le rail à double niveau (8) possède une ouverture d'enfichage (22), de préférence à une extrémité, et **en ce que** l'élément coulissant (15) de la poutre d'arrimage de la charge (10) et/ou de la poutre à double niveau (9) est enfiché dans le rail à double niveau (8) et/ou peut être sorti du rail à double niveau (8) par l'ouverture d'enfichage (22) .

6. Carrosserie de véhicule utilitaire selon la revendication 4 ou 5, **caractérisée en ce que** l'élément coulissant (15) présente au moins dans certaines portions une section transversale en forme de T et/ou vient en prise par l'arrière avec les nervures (18) du rail à double niveau (8).

7. Carrosserie de véhicule utilitaire selon l'une des revendications 4 à 6, **caractérisée en ce que** l'élément coulissant (15) est réalisé sous la forme d'une pièce glissante, d'une roue ou possédant au moins un galet.

8. Carrosserie de véhicule utilitaire selon l'une des revendications 1 à 7, **caractérisée en ce que** la poutre d'arrimage de la charge (10) est de configuration télescopique et/ou possède au moins un élément coulissant (15) positionnable en longueur et/ou transversalement.

9. Carrosserie de véhicule utilitaire selon l'une des revendications 1 à 8, **caractérisée en ce que** les rails à double niveau (8) possèdent des cavités (21) dans le sens longitudinal, de préférence à écarts réguliers, et **en ce que** la poutre d'arrimage de la charge (10) et/ou l'au moins une poutre à double niveau (9) vient en prise dans une cavité (21) en vue de prendre appui contre les rails à double niveau (8).

10. Carrosserie de véhicule utilitaire selon la revendication 9, **caractérisée en ce que** la poutre d'arrimage de la charge (10) et/ou l'au moins une poutre à double niveau (9) possède au moins un élément de blocage destiné à venir en prise et à s'appuyer dans les cavités (21) des rails à double niveau (8).

11. Carrosserie de véhicule utilitaire selon la revendication 10, **caractérisée en ce que** les éléments de blocage (16) de la poutre d'arrimage de la charge (10) sont positionnables depuis la position de montage dans une position de positionnement, de préférence coulissants perpendiculairement par rapport aux rails à double niveau (8), et **en ce que** dans la position de positionnement, les éléments coulissants (15) de la poutre d'arrimage de la charge (10) peuvent être déplacés dans le rail à double niveau (8) dans la direction longitudinale.

12. Carrosserie de véhicule utilitaire selon la revendication 10 ou 11, **caractérisée en ce que** les éléments de blocage (16) de la poutre d'arrimage de la charge (10) sont couplés à une unité de commande (14), de préférence un levier, de telle sorte que l'actionnement de l'unité de commande (14) permet de positionner les éléments de blocage (16) de la position de montage dans la position de positionnement et retour.

13. Carrosserie de véhicule utilitaire selon l'une des revendications 10 à 12, **caractérisée en ce que** les éléments de blocage (16) et/ou l'unité de commande (14) sont contraints par ressort en direction de la position de positionnement des éléments de blocage (16).

14. Carrosserie de véhicule utilitaire selon l'une des revendications 1 à 13, **caractérisée en ce que** la poutre d'arrimage de la charge (10) possède une baguette de protection anti-abrasion (25) en matière plastique, de préférence en forme de bourrelet, adjacente à au moins une paroi latérale (5, 6).

15. Carrosserie de véhicule utilitaire selon l'une des revendications 1 à 14, **caractérisée en ce que** la forme de base de la poutre d'arrimage de la charge (10) est formée par au moins deux profilés partiels (12, 13) .
